# EUROPEAN PATENT APPLICATION

(11) **EP 2 926 670 A1**
(43) Date of publication of application: **07.10.2015**
(21) Application number: 12887843.6
(22) Date of filing: 29.10.2012
(51) Int. Cl.: A23L 1/05, A23L 1/36, A23C 20/02

(54) **CHEESE SUBSTITUTE AND METHOD FOR THE PRODUCTION THEREOF**

(71) Applicant: Maria Diet S.L., 12400 Segorbe (Castellón) (ES)
(72) Inventor: DUESO VILLAR, Rafael, 12400 Segorbe (Castellón) (ES)
(74) Representative: CapitÀ¡n García, Maria Nuria
(86) International application number: PCT/ES2012/070754
(87) International publication number: WO 2014/068147

(57) **Abstract**

The object of this invention is a cheese substitute comprising as ingredients water, dried fruits and a coagulant, characterised in that the ratios of the ingredients by weight of cheese substitute are as follows:
- water from 50% to 80%,
- dried fruits from 5% to 40%,
- coagulant from 0.1% to 10%, and
- natural or artificial flavours from 0 to 5%,

containing 5% to 30% of proteins, from 2% to 30% of fats and from 1% to 30% of carbohydrates, from the total nutritional value.

## Description

### OBJECT OF THE INVENTION

This invention relates to the preparation of foodstuffs alternative to dairy products, using edible plant materials rich in proteins and fats.

Specifically, the invention is a cheese substitute made from dried fruits, for instance, amongst others, almonds, cashews, peanuts, hazelnuts and walnuts.

### BACKGROUND OF THE INVENTION

Cheese is a solid food made up from curdled milk from cow, goat, sheep, buffalo, camel or other ruminant mammals.

Hundreds of varieties of cheese are found in the market. Its differences in styles and tastes are the result of the use of several species of bacteria and moulds, different levels of cream in milk, different curing times, different treatments in their manufacturing process as well as different types of milk.

Other factors also affecting cheese taste are the diet of cattle and the addition of flavouring preparations such as grass, spices or smoked food.

According to their maturation, cheese are classified as: fresh, white pasteurised, ripened (soft, semi-mature, mature, old and/or aged) and mould ripened.

Cheese is an important source of proteins and calcium; however, it also contains fat and salt amongst its main components.

According to its fat content, cheese is classified as (expressed as percentage mass/mass over total dry extract):
- extra-fatty, minimum 60%,
- fatty, minimum from 45% to 60%,
- semi-fatty, minimum from 25% to 45%,
- semi-skimmed, minimum from 10% to 25%, and
- skimmed, lower than 10%.

Cheese also shows high levels of cholesterol, depending on the type of cheese, that will range from 80 to 100 mg/100g.

Cholesterol is an essential nutrient for human life; however, our body produces all cholesterol it needs, so it is not necessary to acquire it in the food we take.

It has been scientifically demonstrated that high cholesterol levels in blood increase the risk of suffering heart diseases and stroke.

Therefore, we must avoid consuming this food with a high cholesterol content. Significant sources of cholesterol are animal food, such as red meat, dairy products and derivatives thereof (mainly cheese).

Unsaturated fatty acids contribute to keeping normal cholesterol levels in blood. Therefore, it is recommended to replace saturated fats by unsaturated fats, as these contribute to keeping normal cholesterol levels in blood.

The above arguments and the attempts to reduce the costs of preparing cheese have led to the development of analogous or similar foodstuffs using vegetable fat for complete or partial substitution of milk fat, as this is much more expensive.

These foodstuffs analogous to cheese, also called cheese substitutes, provide the taste, texture and consistency of the traditional cheese made from milk at a low cost.

The sources of edible vegetable materials rich in proteins and fats used as current ingredients of cheese substitutes are highly diverse.

Document GB 2255489, published on 11 November 1992, discloses a procedure for producing vegetable fat cream and a cheese of the same product.

The process proposes to form a mixture of vegetable fat and milk serum at a weight ratio of 1:1.5 to 1:9, wherein the vegetable mass comprises in weight at least 70% of unsaturated fatty acids.

The mixture is made to form an artificial cream and is homogenised at a pressure of 500 to 1500 psi and at a temperature of 50 to 55°C.

The vegetable fat cream produced can be mixed with milk for consumption as milk or to produce a product of Cheddar type cheese, with a high content in unsaturated fat and a relatively low total fat content.

On the other hand, patent document US 5807601, published on 15 September, 1998, describes a cheese substitute manufactured with at least 2% of protein and/or less than 1% of casein protein, comprising:
a) from about 3% to about 30% of starch,
b) from about 0 to about 30% of edible fat matter,
c) from about 20% to about 60% of water,
d) from about 0.5% to about 25% of carbohydrates without starch,
e) from about 0.5% to about 5% of hydrocolloid stabilisers,
and optionally can contain to about 2% of cheese taste and to about 2% of colour.

Document US 2010/0196575, published on 5 August, 2010, shows a cheese substitute based on vegetable protein, with a low animal fat composition, comprising a humidity of at least about 50% in weight of the cheese composition, a vegetable protein material, a vegetable oil triglyceride and a hydrocolloid.

The vegetable protein material is selected from the group consisting of legumes, corn, peas, canola, sunflower, sorghum, rice, amaranth potato, tapioca, arrow root, canna, lupin, rapeseed, wheat, oats, rye, barley and mixtures thereof.

The cheese substitute can also comprise at least a component selected from the group consisting of a cheese flavouring and starch.

### DESCRIPTION OF THE INVENTION

Give the above, the object of this invention is a cheese substitute made from a vegetable material.

The cheese substitute comprises as ingredients water, edible vegetable materials rich in proteins and fats and a coagulant.

These edible vegetable materials rich in proteins and fats are dried fruits, and the water to dried fruit ratios by weight of cheese substitute are as follows:
- water from 50% to 80%, and
- dried fruits from 5% to 40%.

The cheese substitute has the following ranges of nutritional values:
- from 5% to 30% of proteins with a high total nutritional value,
- from 2% to 30% of fat of the total nutritional value, and
- from 1% to 30% of carbohydrates of total nutritional value.

The cheese substitute described above can be considered a source of proteins, as it provides at least 12% of the energy value of the food. According to some references, it could be even considered as a food with a high protein content, since it provides at least 20% of the energy value of the food.

On the other hand, it is a source of diet fibre, since it contains at least 3 g of fibre/100 g.

As shown above, its fat content is lower than 30%. These fats contribute mainly unsaturated fatty acids, over 50%, while their content in saturated fats is lower than 5%.

With regard to the cholesterol content, it is less than 2 mg/100 g of product and its energy value ranges from 100 to 350 Kcal/100 g.

The procedure for obtaining this cheese substitute comprises the following steps:
a) dissolving the coagulant in about 70% of the water used to manufacture the cheese substitute,
b) mixing the dried fruits with the remaining water,
c) heating the dissolution of water and coagulant, allowing it to boil for about 0.5 to 15 minutes,
d) mixing the ingredients mixed in step b) with the dissolution of water and coagulant to achieve an emulsified paste,
e) adding the emulsified paste of the mixture to a mould,
f) heat treating the emulsified paste,
g) allowing to cool for at least 6 hours, and
h) removing the mould.

Therefore, a cheese substitute is obtained that has the taste, texture and consistency of traditional cheese made from milk.

The cheese substitute discussed is suitable for use in human diet, and can be supplied for the market in several shapes or appearances, depending on the type of cheese to be mimicked, for example, amongst others, Manchego cheese, fresh cheese of Burgos, Cabrales cheese, etc.

It can be also an ingredient in other foodstuffs.

Therefore, the costs of preparation are reduced, obtaining a healthier foodstuff, lower in cholesterol, rich in fibre and low in saturated fats; even, if desired, it can be lower in calories as compared to the analogous cheese in shape, texture and taste.

### PREFERRED EMBODIMENT OF THE INVENTION

This invention is a cheese substitute manufactured from a vegetable matter.

The ingredients of the cheese substitute include water and edible vegetable materials rich in proteins and fat. These edible vegetable materials are dried fruits.

Preferably these dried fruits are almonds, either raw natural, dehydrated or roasted.

Almonds can be of any variety or class of sweet almonds used for diet, for instance, Jordan almonds, Marcona almonds, soft-shelled almond, Largueta almond, Ferragnes, Guara and other less known varieties, such as Garrigus, Atocha, Ramillete, Glorieta, amongst others.

Also, preferably these almonds are shelled and peeled.

Furthermore, preferably the almonds are defatted before they are used in the preparation of the cheese substitute.

In another variant, almonds are grown under organic farming.

Furthermore, the dried fruits used in the preparation of the cheese substitute may also be, for example, amongst others, cashews, peanuts, hazelnuts, walnuts, and others.

Also the cheese substitute could be made from a mixture of dried fruits, for example, and not limited to, almonds, cashews, peanuts, hazelnuts, walnuts, and others.

The water to dried fruit ratios by weight of cheese substitute are as follows:
- from 50% to 80% of water, and
- from 5% to 40% of dried fruits.

Another ingredient of the cheese substitute is a coagulant. Preferably, the coagulant represents from 0.1% to 10% by weight of cheese substitute, and may be agar-agar or another gelling or thickening matter.

The cheese substitute can also include one or several of the following ingredients:
- natural or artificial flavours, representing from 0 to 5% by weight of cheese substitute,
- acidulants or acid correctors selected from the group consisting of natural lemon juice or concentrate or another citric, citric acid, malic acid, lactic acid, tartaric acid, phosphoric acid, or another acidifier, representing from 0 to 5% by weight of cheese substitute,
- yeasts, yeast extract, monosodium glutamate, hydrolysed plant proteins or other substances used as flavour enhancers,
- edible salt, potassium chloride or another salt substitute substance, representing from 0 to 4% by weight of cheese substitute,
- emulsifier, colour emulsifier, preservative or another food additive, representing from 0 to 5% by weight of cheese substitute,
- fresh, dehydrated or freeze-dried fruits, dried vegetables, spices, plants or other solid food, homogeneously distributed in the cheese substitute,
- sugars, i.e., any raw material rich in carbohydrates, representing from 0 to 10% by weight of cheese substitute, and
- vitamins, minerals, amino acids and other functional substances added.

The cheese substitute could also include from 0 to 20% of fat or vegetable oil, preferably non-hydrogenated vegetable oil.

For the purpose of achieving a cheese substitute with aromas and flavours of specific cheese it could also include as ingredients concentrated cheese or other dairy products, representing from 0 to 25% by weight of cheese substitute.

For obtaining the cheese substitute, these steps are followed:
First, dissolve the coagulant in about 70% of the total water used in the manufacture of the cheese substitute.

Then, mix the dried fruits with the remaining water. If desired, other ingredients can be added to be mixed with the dried fruit, such as:
- natural or artificial flavours,
- acidulants or acidity correctors selected from the group consisting of natural lemon juice or concentrate or another citric, citric acid, malic acid, lactic acid, tartaric acid, phosphoric acid or another acidifier,
- yeasts, yeast extract, monosodium glutamate, hydrolysed plant proteins or another substance of those used as flavour enhancers,
- edible salt, potassium chloride or another salt substitute substance,
- emulsifier, colour emulsifier, preservative or another food additive,
- sugars, and
- vitamins, minerals, amino acids and other functional substances added.

Cheese or other dairy products can be added for achieving a cheese substitute with certain flavours and tastes of specific cheese.

Furthermore, fresh, dehydrated or freeze-dried fruits, dried vegetables, spices or other solid food, for instance, dates, olives, etc., may be added to the mix. These are uniformly distributed throughout the product, unlike dairy ingredients that are agglomerated and not distributed throughout the cheese.

Then heat the water and coagulant dissolution, and allow it to boil for about 0.5 to 15 minutes,

Then mix the mixture of dried fruits and water with the water and anticoagulant dissolution to achieve and emulsified paste. This mixture of dried fruits and water can contain other additional ingredients, as seen in the above steps.

Once a mixture is obtained that has the consistency of an emulsified paste, pour it into a mould and heat treat it.

Heat treatment of the emulsified paste can be performed by pasteurisation a low temperatures for long times, for instance, at a temperature from about 60° C to about 68° C and for a time from 30 to 60 minutes. Preferably, at a temperature of about 60° C and for a time from 30 to 60 minutes.

This pasteurisation could be also performed in short times at high temperatures, for instance, at a temperature from about 70° C to about 90° C and for a time ranging from 15 seconds to 5 minutes. Preferably, at a temperature of about 70° C and for a time from 15 seconds to 5 minutes.

Furthermore, another option is to perform ultra-pasteurisation at a temperature from about 85° C to about 100° C and for a time ranging from 1 to 5 seconds.

Pasteurisation provides a longer useful life to the cheese substitute obtained, requiring refrigeration for storage.

Then, heat treatment of the emulsified paste could be performed by sterilisation or UHT (ultra-high temperature) when it is desired that the cheese substitute obtained can be stored in fresh and dry environments without requiring refrigeration temperatures. This sterilisation will be performed at about 138° C and for a time of 2 seconds.

On the other hand, pouring the mix into the mould can be performed using an industrial filler. The mix is filled in natural or synthetic casings and then placed in a mould, for instance, in block cheese shape.

The moulds to be used can be square, rectangular, round, cylindrical or any other geometric shape simulating the shape of a whole piece of cheese of different sizes.

Subsequently, allow to cool for at least 6 hours.

Finally, the mould is removed from the cheese substitute obtained.

The resulting cheese substitute bars can be marketed in that shape or can be processed for marketing in another format.

Furthermore, if desired, the cheese substitute can be coated with the a wax bark or other edible materials.

If it is to be marketed in another format, the bars can be cut as slices, wedges, bars, blocks, balls, etc.; or they can be marketed grated, in powder or emulsified for spreading.

The resulting products are vacuum-packed or packed in a protective atmosphere and stored a temperature from 2 to 8°C. In case it has been sterilised, cold is not necessary for storage.

Some examples of cheese substitutes are given below according to the present invention.

### Example 1

A cheese substitute with goat cheese flavour with dates in wedge, square or roller shape was prepared following the procedure described above and with the following ingredients:
- water 56.50% (39.55% to be mixed with the coagulant and 16.95% to be mixed with the rest of the ingredients),
- almond 20%,
- agar-agar (coagulant) 3.50%,
- concentrated lemon juice 1%,
- sea salt 1%,
- yeast extract 0.5%,
- olive oil 5%,
- goat cheese flavour 1.50%,
- rice syrup 1%, and
- dehydrated dates 10%.

### Example 2

A cheese substitute was prepared in grated form, following the procedure described above and with the following ingredients:
- water 66.20% (46.34% to be mixed with the coagulant and 19.86% to be mixed with the rest of the ingredients),
- almond 20%,
- agar-agar 5%,
- concentrated lemon juice 1%,
- sea salt 1%,
- yeast extract 0.5%,
- olive oil 5%,
- Manchego cheese flavour 1%, and
- orange colour (natural extract of fruits and vegetables) 0.3%.

### Example 3

A cheese substitute to lactose-free cheese in slices was prepared following the procedure described above and with the following ingredients:
- water 65.5% (45.85% to be mixed with the coagulant and 19.65% to be mixed with the rest of the ingredients),
- almond 20%,
- agar-agar 3.5%,
- concentrated lemon juice 1%,
- sea salt 1%,
- yeast extract 1%,
- olive oil 5%, and
- rice syrup 3%.

### Example 4

A cheese substitute to spreadable fine herbs cheese was prepared, following the procedure described above and with the following ingredients:
- water 67.50% (47.25% to be mixed with the coagulant and 20.25% to be mixed with the rest of the ingredients),
- almond 20%,
- agar-agar 3.5%,
- concentrated lemon juice 1%,
- sea salt 1%,
- yeast extract 0.5%,
- olive oil 5%,
- creamy cheese type flavour 1%, and
- spices 0.5%.

## Claims

1. Cheese substitute comprising as ingredients water, edible vegetable materials rich in proteins and fats, and a coagulant, **characterised in that** the edible vegetable materials rich in proteins and fats are dried fruits, the water and dried fruits ratios by weight of cheese substitute are as follows:
- water from 50% to 80%, and
- dried fruits from 5% to 40%.

2. Cheese substitute according to claim 1 wherein the dried fruits are shelled and peeled almonds, whether natural raw, dehydrated or roasted.

3. Cheese substitute according to claim 2 wherein the almonds are defatted.

4. Cheese substitute according to claim 2 wherein the almonds are grown under organic farming.

5. Cheese substitute according to claim 1 wherein the dried fruits are selected from the group consisting of cashew nuts, peanuts, hazelnuts and walnuts.

6. Cheese substitute according to claim 1 wherein the dried fruits are a mixture of two or more dried fruits selected from the group consisting of almonds, cashews, peanuts, hazelnuts and walnuts.

7. Cheese substitute according to claim 1 wherein the coagulant is agar-agar or another gelling or thickening substance, representing from 0.1% to 10% by weight of cheese substitute.

8. Cheese substitute according to claim 1 that includes natural or artificial flavours, representing from 0 to 5% by weight of cheese substitute.

9. Cheese substitute according to claim 1 that includes acidulants or acid correctors selected from the group consisting of natural lemon juice or concentrate or another citric, citric acid, malic acid, lactic acid, tartaric acid, phosphoric acid, or another acidifier, representing from 0 to 5% by weight of cheese substitute,

10. Cheese substitute according to claim 1 including as ingredient yeasts, yeast extract, monosodium glutamate, hydrolysed plant proteins or other substances used as flavour enhancers.

11. Cheese substitute according to claim 1 that includes edible salt, potassium chloride or another salt substitute substance, representing from 0 to 4% by weight of cheese substitute.

12. Cheese substitute according to claim 1 that includes emulsifier, colour emulsifier, preservative or another food additive, representing from 0 to 5% by weight of cheese substitute.

13. Cheese substitute according to claim 1 that includes cheese or another dairy product, representing from 0 to 25% by weight of cheese substitute.

14. Cheese substitute according to claim 1 that includes fresh, dehydrated or freeze-dried fruits, dried vegetables, spices, plants or other solid food, homogeneously distributed in the cheese substitute.

15. Cheese substitute according to claim 1 that includes sugars, representing from 0 to 10% by weight of cheese substitute.

16. Cheese substitute according to claim 1 that includes as ingredients vitamins, minerals, amino acids and other added functional substances.

17. Procedure for obtaining the cheese substitute according to the preceding claims, that comprises the following steps:
a) dissolving the coagulant in about 70% of the water used to manufacture the cheese substitute,
b) mixing the dried fruits with the remaining water,
c) heating the dissolution of water and coagulant, allowing it to boil for about 0.5 to 15 minutes,
d) mixing the ingredients mixed in step b) with the dissolution of water and coagulant to achieve an emulsified paste,
e) adding the emulsified paste of the mixture to a mould,
f) heat treating the emulsified paste,
g) allowing to cool for at least 6 hours, and
h) removing the mould.

18. Procedure for obtaining a cheese substitute according to claim 17, wherein one or more of the following ingredients are added to the mixture of step b) :
- natural or artificial flavours,
- acidulants or acidity correctors selected from the group consisting of natural or concentrate lemon juice or another citric, citric acid, malic acid, lactic acid, tartaric acid, phosphoric acid or another acidifier,
- yeasts, yeast extract, monosodium glutamate, hydrolysed plant proteins or another substance of those used as flavour enhancers,
- edible salt, potassium chloride or another salt substitute substance,
- emulsifier, colour emulsifier, preservative or another food additive,
- cheese or other dairy products,
- fresh, dehydrated or freeze-dried fruits, dried vegetables, spices, plants or other solid food,
- sugars, and
- vitamins, minerals, amino acids and other functional substances added.

19. Procedure for obtaining a cheese substitute according to claim 17, wherein the heat treatment of the step f) is performed by pasteurisation at low temperatures for long times, at a temperature of about 60°C and for a time from 30 to 60 minutes.

20. Procedure for obtaining a cheese substitute according to claim 17, wherein the heat treatment of the step f) is performed by pasteurisation at high temperatures for short times, at a temperature of about 70°C and for a time from 15 seconds to 5 minutes.

21. Procedure for obtaining a cheese substitute according to claim 17, wherein the heat treatment of the step f) is performed by ultra-pasteurisation at a temperature from about 85°C to about 100°C and for a time from 1 to 5 seconds.

22. Procedure for obtaining a cheese substitute according to claim 17, wherein the heat treatment of the step f) is performed by sterilisation at a temperature of about 138°C and for a time of 2 seconds.

## Amended claims

### Amended claims under Art. 19.1 PCT

1. Cheese substitute comprising as ingredients water, dried fruits and a coagulant, **characterised in that** the ratios of the ingredients by weight of cheese substitute are as follows:
- water from 50% to 80%,
- dried fruits from 5% to 40%,
- coagulant from 0.1% to 10%, and
- natural or artificial flavours from 0 to 5%,
containing 5% to 30% of proteins, from 2% to 30% of fat and from 1% to 30% of carbohydrates, from the total nutritional value.

2. Cheese substitute according to claim 1 wherein the dried fruits are shelled and peeled almonds, whether natural raw, dehydrated or roasted.

3. Cheese substitute according to claim 2 wherein the almonds are defatted.

4. Cheese substitute according to claim 2 wherein the almonds are grown under organic farming.

5. Cheese substitute according to claim 1 wherein the dried fruits are selected from the group consisting of cashew nuts, peanuts, hazelnuts and walnuts.

6. Cheese substitute according to claim 1 wherein the dried fruits are a mixture of two or more dried fruits selected from the group consisting of almonds, cashews, peanuts, hazelnuts and walnuts.

7. Cheese substitute according to claim 1 wherein the coagulant is agar-agar or another gelling or thickening substance.

8. Cheese substitute according to claim 1 that includes acidulants or acid correctors selected from the group consisting of natural lemon juice or concentrate or another citric, citric acid, malic acid, lactic acid, tartaric acid, phosphoric acid, or another acidifier, representing from 0 to 5% by weight of cheese substitute,

9. Cheese substitute according to claim 1 including as ingredient yeasts, yeast extract, monosodium glutamate, hydrolysed plant proteins or other substances used as flavour enhancers.

10. Cheese substitute according to claim 1 that includes edible salt, potassium chloride or another salt substitute substance, representing from 0 to 4% by weight of cheese substitute.

11. Cheese substitute according to claim 1 that includes emulsifier, colour emulsifier, preservative or another food additive, representing from 0 to 5% by weight of cheese substitute.

12. Cheese substitute according to claim 1 that includes cheese or another dairy product, representing from 0 to 25% by weight of cheese substitute.

13. Cheese substitute according to claim 1 that includes fresh, dehydrated or freeze-dried fruits, dried vegetables, spices, plants or other solid food, homogeneously distributed in the cheese substitute.

14. Cheese substitute according to claim 1 that includes sugars, representing from 0 to 10% by weight of cheese substitute.

15. Cheese substitute according to claim 1 that includes as ingredients vitamins, minerals, amino acids and other added functional substances.

The changes carried out in the original set of claims are the following:
- modifying claim 1 to replace the feature *"edible vegetable material rich in proteins and fats",* cited in the preamble to that claim 1, by *"dried fruits",* (the base for this amendment can be found in the characterizing portion of the original claim 1), and include in the characterizing portion the proportions of coagulant and flavorings (the basis for this amendment can be found in original claims 7 and 8) and the value ranges of proteins, fats and carbohydrates mentioned in the description (page 6, lines 6-11) ;
- modification of claim 7, the proportions of coagulant were deleted from this claim to include them in claim 1 as amended;
- delete claim 8, the content of this claim was inserted in claim 1 as amended;
- renumber claims 9 to 16 (now be claims 8 to 15); and
- delete claims 17 to 22.
